# EUROPEAN PATENT SPECIFICATION

(11) **EP 4 291 439 B1**
(45) Date of publication and mention of the grant of the patent: **21.10.2026**
(21) Application number: 22709635.1
(22) Date of filing: 11.02.2022
(51) Int. Cl.: B60L 53/16, B60L 53/31, B60L 53/36, B65G 1/04

(54) **APPARATUS FOR CHARGING A ROBOTIC LOAD HANDLING DEVICE**
VORRICHTUNG ZUM AUFLADEN EINER ROBOTER-LASTHANDLINGVORRICHTUNG
APPAREIL POUR CHARGER UN DISPOSITIF DE MANUTENTION DE CHARGE ROBOTIQUE

(30) Priority: 12.02.2021 GB 202101996
(43) Date of publication of application: 20.12.2023
(73) Proprietor: Ocado Innovation Limited, Hatfield, Hertfordshire AL10 9UL (GB)
(72) Inventor: STAREY, Christopher, Hatfield Hertfordshire AL10 9UL (GB); HASKINS, Kevin, Hatfield Hertfordshire AL10 9UL (GB)
(74) Representative: Ocado Group IP Department
(86) International application number: PCT/EP2022/053434
(87) International publication number: WO 2022/171833

(56) References cited:
- WO-A1-2019/215221
- WO-A1-2019/238702
- WO-A1-2021/151902
- WO-A1-2021/151903

## Description

### Technical Field

The present invention relates generally to the field of robotic load handling devices and more specifically to an apparatus and method for charging a robotic load handling device.

### Background

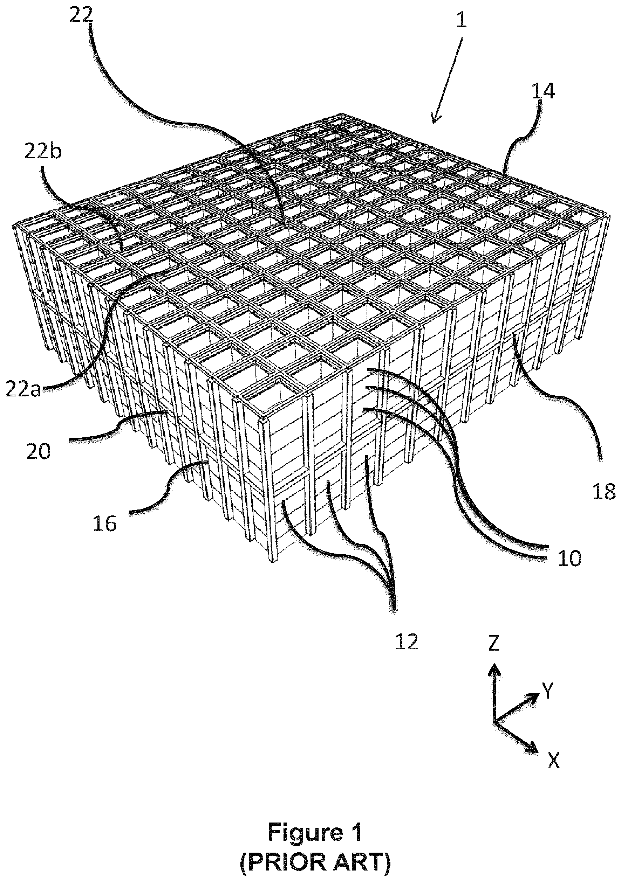

Storage systems comprising a three-dimensional storage grid structure, within which storage containers/bins are stacked on top of each other, are well known. PCT Publication No. WO2015/185628A (Ocado) describes a known storage and fulfilment system in which stacks of bins or containers are arranged within a grid framework structure. The bins or containers are accessed by load handling devices operative on tracks located on the top of the grid framework structure. A storage system 1 of this type is illustrated schematically in Figures 1 to 3 of the accompanying drawings.

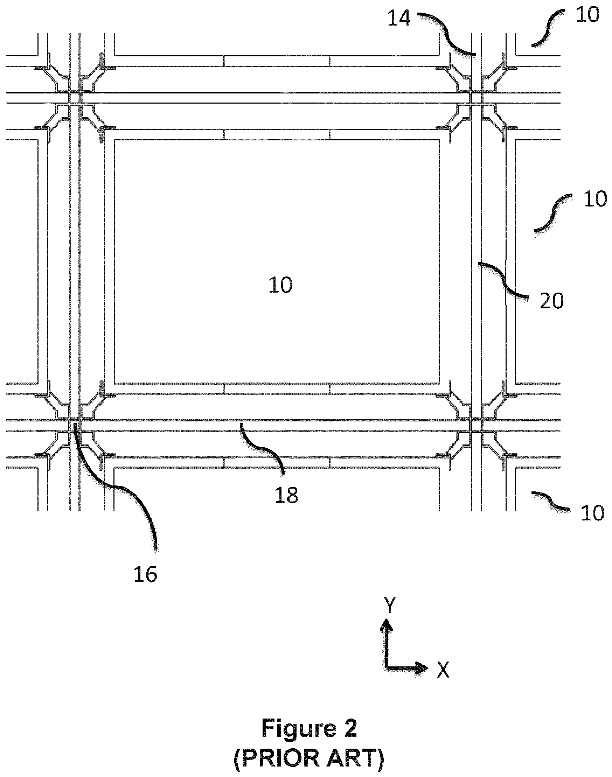

As shown in Figures 1 and 2, stackable containers, known as bins 10, are stacked on top of one another to form stacks 12. The stacks 12 are arranged in a grid framework structure 14 in a ware-housing or manufacturing environment. The grid framework structure 14 is made up of a plurality of storage columns or grid columns. Each grid in the grid framework structure 14 has at least one grid column for storage of a stack of containers. Figure 1 is a schematic perspective view of the grid framework structure 14, and Figure 2 is a top-down view showing a stack 12 of bins 10 arranged within the grid framework structure 14. Each bin 10 typically holds a plurality of product items (not shown), and the product items within a bin 10 may be identical, or may be of different product types depending on the application.

The grid framework structure 14 comprises a plurality of upright members 16 that support horizontal members 18, 20. A first set of parallel horizontal members 18 is arranged perpendicularly to a second set of parallel horizontal members 20 to form a plurality of horizontal grid structures supported by the upright members 16. The members 16, 18, 20 are typically manufactured from metal. The bins 10 are stacked between the members 16, 18, 20 of the grid framework structure 14, so that the grid framework structure 14 guards against horizontal movement of the stacks 12 of bins 10, and guides vertical movement of the bins 10.

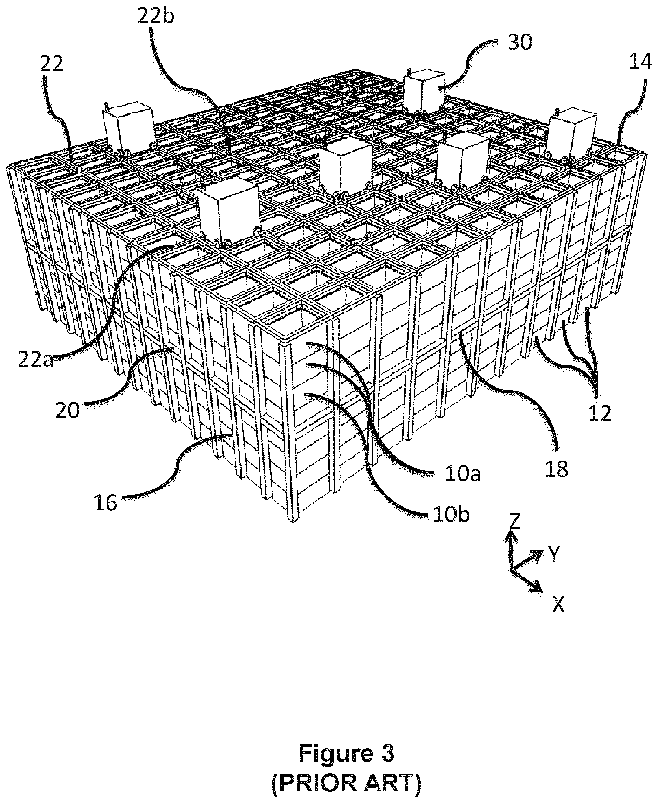

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device 30 shown in Figure 4 and 5 comprises a vehicle body 32 as described in PCT Patent Publication No. WO2015/019055 (Ocado), hereby incorporated by reference, where each load handling device 30 only covers one grid space of the grid framework structure 14. Here, the load handling device 30 comprises a wheel assembly comprising a first set of wheels 34 consisting of a pair of wheels on the front of the vehicle body 32 and a pair of wheels 34 on the back of the vehicle 32 for engaging with the first set of rails or tracks to guide movement of the device in a first direction, and a second set of wheels 36 consisting of a pair of wheels 36 on each side of the vehicle 32 for engaging with the second set of rails or tracks to guide movement of the device in a second direction. Each of the sets of wheels are driven to enable movement of the vehicle in X and Y directions respectively along the rails. One or both sets of wheels can be moved vertically to lift each set of wheels clear of the respective rails, thereby allowing the vehicle to move in the desired direction on the grid.

The load handling device 30 is equipped with a lifting device or crane mechanism to lift a storage container from above. The crane mechanism comprises a winch tether or cable 38 wound on a spool or reel (not shown) and a grabber device 39. The lifting device comprises a set of lifting tethers 38 extending in a vertical direction and connected nearby or at the four corners of a lifting frame 39, otherwise known as a grabber device (one tether near each of the four corners of the grabber device) for releasable connection to a storage container 10. The grabber device 39 is configured to releasably grip the top of a storage container 10 to lift it from a stack of containers in a storage system of the type shown in Figure 1 and 2.

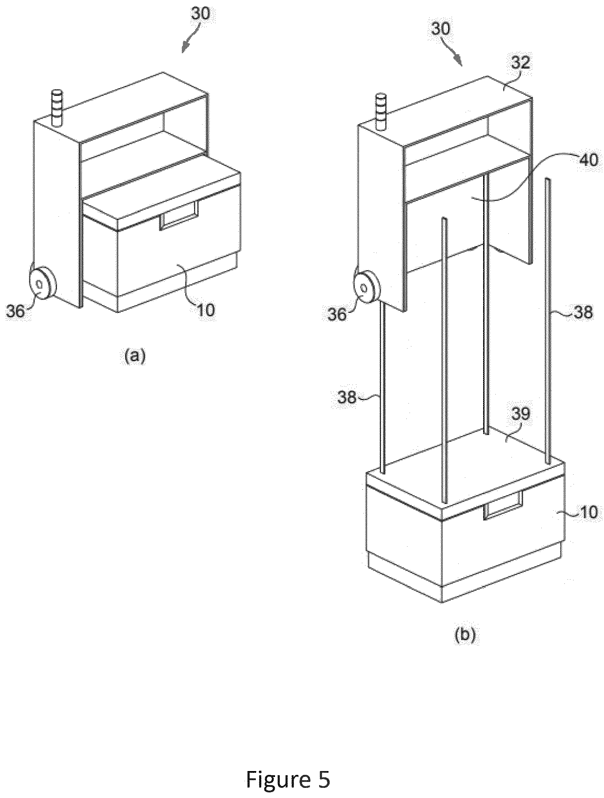

The wheels 34, 36 are arranged around the periphery of a cavity or recess, known as a container-receiving recess 40, in the lower part. The recess is sized to accommodate the container 10 when it is lifted by the crane mechanism, as shown in Figure 5 (a and b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device.

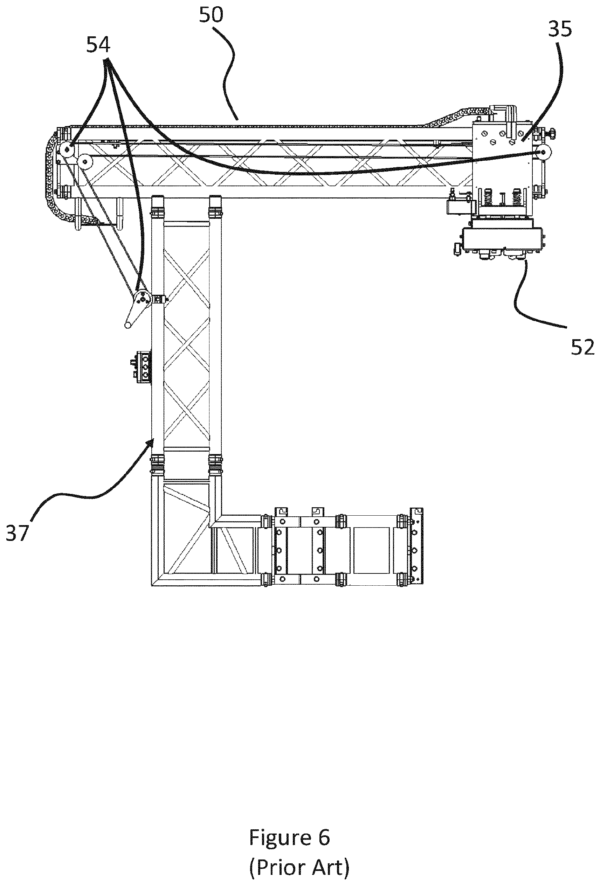

Although not shown in Figures 1-3, the load handling device 30 is powered during operation by an on-board rechargeable battery. Examples of rechargeable batteries are Lithium-Ion battery, Nickel-Cadmium battery, Nickel-Metal Hydride battery, Lithium-Ion Polymer battery, Thin Film battery and Smart battery Carbon Foam-based Lead Acid battery. The battery is recharged while the load handling device 30 is operative on the grid framework structure 14 by a charge station 50 shown in Figure 6. The charge station 50 is typically an L shaped structure that is fixed proximate to the grid framework structure 14 and extends over a nominal grid cell at an edge of the grid structure. The charge station comprises a charge head assembly 52 comprising charge contacts which are fixed in position relative to the L shaped structure. The charge head assembly is mounted to one arm 54 of the L shaped structure such that the charge head assembly 52 is suspended over at least two grid spaces of the grid framework structure. A load handling device may be charged by being instructed to move to a grid cell above which the charge head assembly is located. As the load handling device moves into the grid cell, a contact is made between a charge contact pad on a top surface of the load handling device, and the charge contacts of the charge head assembly 52. A charge is imparted to the load handling device from the charge contacts through the charge contact pad situated on the top surface of the load handling device.

However, a number of problems exist with the charge station. In particular, due to the movement of the robotic load handling device into the charge station, a clamping force exists between the charge contacts and the robotic load handling device. The magnitude of this force can cause problems to arise over a period of time. For example, repeated entries of succeeding robotic load handling devices into the grid cell above which the charge station is located causes a fatiguing of the charge station which will then require maintenance or replacement of the charge head assembly and supporting structure. Moreover, vibration of the grid framework structure caused by movement of the robotic load handling devices negatively affects the alignment between the charge contacts of the charge station and the robotic load handling device. Moreover, grid cell damage, wear and material creep causes alignment issues between the charge contacts and the charge pad contacts, negatively affecting the ability of the robotic load handling device to make contact with the charge contacts. Similarly, tolerances in both the manufacture of the grid framework structure and charge station and/or slight variation in installation alignment of the grid framework structure with respect to the charge station and/or thermal expansion of the grid framework structure with respect to the charge station can also cause alignment issues which negatively affect the ability of the robotic load handling device to make contact with the charge contacts. Moreover, the charge contacts wear with time and therefore require periodic servicing or repair. However, the maintenance of the charge contacts requires human intervention on the top of the grid framework structure which can only be performed if the robotic load handling devices on top of the grid framework structure are in a "safe mode" rendering them inoperable. The downtime as a result of the load handling device being idle leads to a loss of production of the whole system.

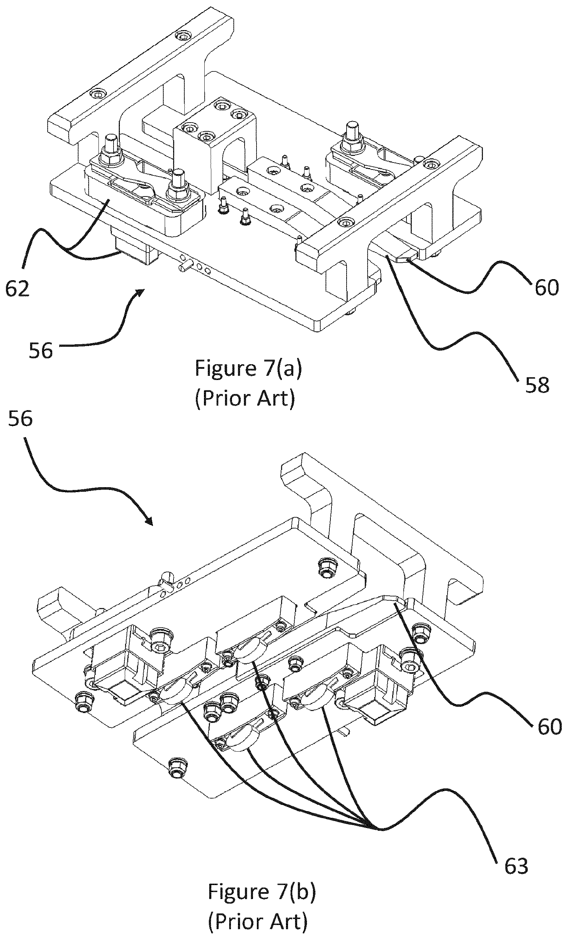

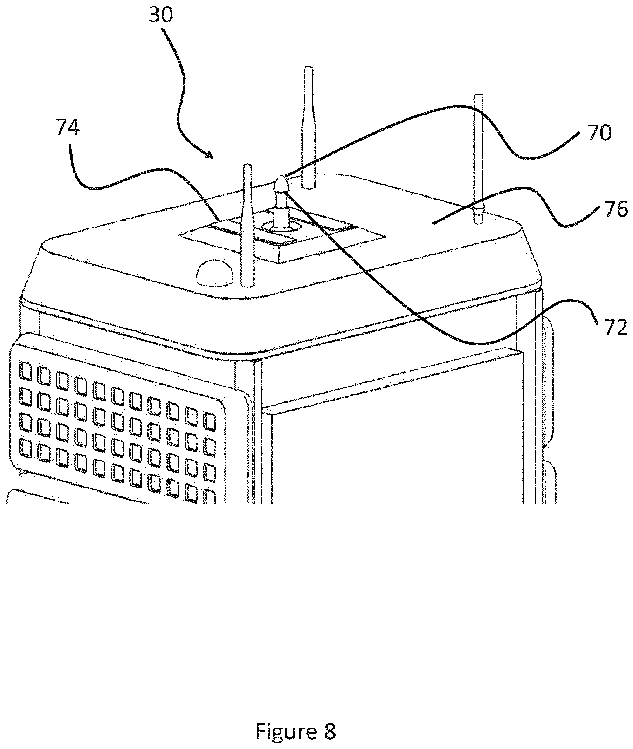

WO2019/215221 (Ocado Innovation Limited) addresses this problem by providing a charge station in which a charge head assembly 52 is drawn towards the charge pad on the top surface of the load handling device. The charge head comprises a charge unit 56 (see Figure 7a and 7b) comprising a plurality of profiled sections 58, 60 arranged to interface with a hoist element 70 of the handling device 30 (see Figure 8) and a power transfer component 62 arranged to transfer power to the load handling device when the hoist element 70 engages with the plurality of profiled sections 58, 60. Figure 8 shows the hoist element 70 used for manual movement of the load handling device 30. The hoist element 70 comprises a cutaway below a bulbous head which gives rise to an underside 72. The hoist element 70 is so designed to permit the attachment of a hoist to lift the load handling device 30 from a grid cell. The power transfer component 62 is typically composed of copper and outwardly biased by a resilient member, e.g. a spring, so as to lessen the impact of the power transfer unit 62 making contact with a charge pad 74 on the top surface 76 of the load handling device 30. In addition to the power transfer unit 62, the charge unit 56 comprises a plurality of charge contacts 63 on its underside. Like the power transfer unit 62, the plurality of charge contacts 63 are outwardly biased by a resilient member, e.g. a spring, so as to lessen the impact of the charge contacts 63 making contact with the charge pad 74 on the top surface 76 of the load handling device 30. In contrast to the power transfer units 62, the additional charge contacts may be for the purpose of preventing arcing between the power transfer units or data transfer during charging.

The plurality of profiled sections 58, 60 and the power transfer unit 62 are arranged in a moveable charge unit 56. The profiled sections 58, 60 comprise upwardly inclined surfaces such that contact between the hoist element 70 and the plurality of profiled sections 58, 60 causes movement of the charge unit 56 towards the load handling device and thereby, controls the amount of clamping force of the charge unit 56, in particular the power transfer unit 62 with the charge pad 74 at the top surface of the robotic load handling device. Together with the resiliently biased power transfer units 62 and/or the plurality of resiliently biased charge contacts 63, damage/wear to the cartridge and/or the top surface of the robotic load handling device is minimised.

Contact between the hoist element 70 and the profiled sections 58, 60 occurs when the load handling device moves over the grid cell below the charge head assembly such that the hoist element is driven into and is received by the profiled sections 58, 60. Whilst various spring mechanisms are used to absorb the impact of the hoist element interacting with the profiled sections 58, 60, a large proportion of the impact, which is largely in the horizontal direction, is absorbed by the L shaped structure supporting the charge unit over the grid cell. This results in the L-shaped structure weakening over time, in particular the mounting of the L-shaped structure to the grid framework structure. In an extreme case, the impact of the hoist element with the profiled sections 58, 60 causes components of the L-shaped structure to buckle over time or detach from the grid framework structure removing the ability of the charge head assembly of the charge unit mounted to the L-shaped structure to properly align with the charge receiving head of the load handling device. Other considerations where misalignment of the load handling device with the charge station can negatively impact the proper operation of the load handling device include the risk of arcing between the power transfer components of the charge station and the charge contacts of the load handling device. In addition, repeated contact between the hoist element from succeeding robotic load handling devices charging at the charge station and the profiled sections 58, 60 would eventually cause the profiled sections to wear over time removing the ability of the charge unit 56 to be drawn towards the charge pad on the top surface of the load handling device.

In WO2019/238702 (Autostore Technology AS), charge receiving elements for charging the battery are mounted to the underside of a container vehicle or load handling device and are arranged to electrically couple with charge providing elements of a charge station located within a single grid cell at a level below the rails on the grid framework structure. In operation, the container vehicle or the load handling device is moved to a position above the charging station such that the charge receiving elements on the underside of the container vehicle are directly above the charge providing elements of the charge station within a grid cell; more specifically their corresponding contact surfaces are directly facing each other. Electrical contact or coupling is achieved by lowering the container vehicle vertically towards the rail grid, e.g. by vertically displacing a set of wheels of the container vehicle, such that the corresponding contact surfaces of the charge receiving elements and the charge providing elements mate. Lowering of the container vehicle towards the rail grid pushes the contact surfaces of the charge receiving elements to mate against the contact surfaces of the charge providing elements of the charge station. The charge receiving elements or the charge providing elements may be connected to a resilient assembly to bias the charge receiving elements or the charge providing elements in a vertical direction. Integrating the charge station within a single grid cell of the grid framework structure and at a level below the rails of the rail grid permits the charging station to be located anywhere on the rail grid without preventing movement of the container vehicle. WO2019/238702 (Autostore Technology AS) is very much restricted to the container vehicle being equipped with a crane device that comprises a cantilever arm that extends laterally from the top of the vehicle to accommodate a container receiving space, i.e. the container is accommodated beneath the cantilever arm and is held above the level of the rails. Equally, the vehicle needs to be sufficiently heavy to counterbalance the weight of a container and to remain stable during a lifting process. As a result, the container vehicle including the container receiving space has a footprint that extends over at least two grid cells.

A charge unit is thus required that does not suffer from the problems discussed above.

### Summary of the Invention

The present invention is set out in the independent claim whereas preferred embodiments and further implementations are outlined in the dependent claims, description and figures.

### Brief Description of the Drawings

Further features and aspects of the present invention will be apparent from the following detailed description of an illustrative embodiment made with reference to the drawings, in which:
Figure 1 is a schematic diagram of a grid framework structure according to a known system,
Figure 2 is a schematic diagram of a top down view showing a stack of bins arranged within the framework structure of Figure 1.
Figure 3 is a schematic diagram of a system showing a known robotic load handling device operating on the grid framework structure.

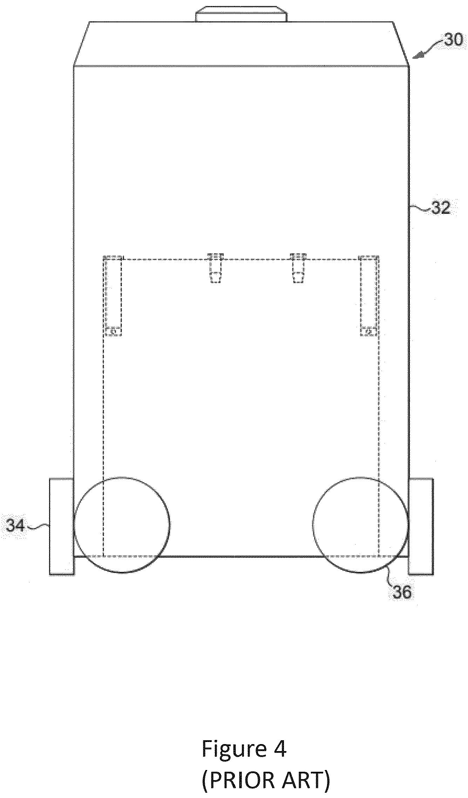

Figure 4 is a schematic diagram of a load handling device according to a known system.
Figure 5(a) and 5(b) are schematic perspective cut away views of the load handling device of Figure 4 showing (b) the container receiving space of the load handling device and (a) a container accommodated within the container receiving space of the load handling device.
Figure 6 is a schematic diagram showing a known charging station comprising a charge unit suspended from a support structure.
Figure 7a is a schematic diagram from above of a known charge unit showing a plurality of profiled sections.
Figure 7b is a schematic diagram from below of the known charge unit showing a power transfer unit.
Figure 8 is a schematic view of a top surface of a known load handling device.
Figure 9 (a and b) are schematic views at different orientations of a charge unit according to an embodiment of the present invention.
Figure 10 (a and b) are schematic views at different orientations of the cartridge for interfacing with the hoist element of the robotic load handling device according to the present invention.
Figure 11 is a perspective rear view of the cartridge according to the embodiment of the present invention.
Figure 12 is a perspective side view of a profiled section according to the embodiment of the present invention.
Figure 13 is a perspective view of a charge head assembly comprising the charge unit contained therein.
Figure 14 is an exploded view of the charge head assembly comprising the housing and the charge unit contained therein.
Figure 15 is a perspective view of a charge station showing the swing arm supporting the charge head assembly orientated in the operative position according to an embodiment of the present invention.
Figure 16 is a perspective view of the charge station showing the swing arm in a service position.
Figure 17 is an exploded view of the housing accommodating the charge head assembly resiliently mounted to the support framework according to the embodiment of the present invention.
Figure 18 is a perspective view of a charge station according to another embodiment of the present invention.

### Detailed Description

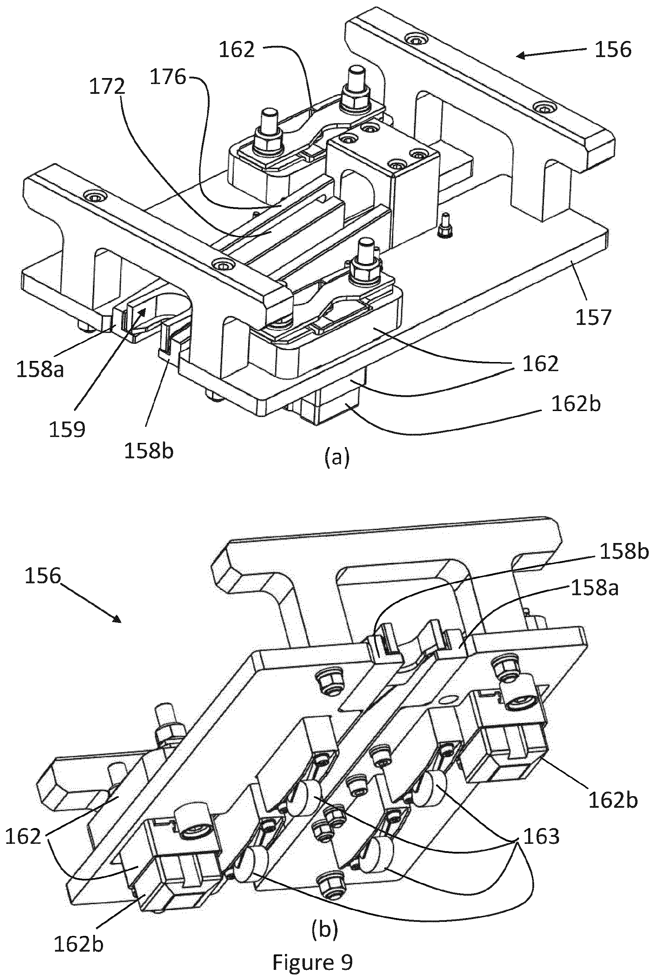

Figure 9a shows a charge unit 156 according to an embodiment of the present invention seen from above. The charge unit 156 comprises a support plate 157 to which are mounted a power transfer means 162 and at least two profiled sections 158. The power transfer means 162 is connected to a suitable power source charger, preferably a DC power source charger. For example, the power source charger comprises a rectifier to convert AC current to DC current. The power transfer means 162 comprises a charge providing head in the form of at least two charge providing pads 162b; one of the at least two charge providing pads providing DC- and the other of the at least two charge providing pads providing DC+. The at least two charge providing pads 162b are arranged to interface or clamp against two corresponding charge receiving pads 74 on the robotic load handling device 30 (see Figure 8).

The charge unit 156 is typically arranged centrally above at least one grid cell for mating with a hoist element 70 of a robotic load handling device 30. As previously described above with reference to Figure 8, the top surface of the robotic load handling device comprises the hoist element 70 and at least two charge receiving pads 74 for transferring power to the rechargeable power source in the robotic load handling device. The hoist element 70 comprises a cutaway below a bulbous head which gives rise to an underside 72. When transferring power to the robotic load handling device to charge the rechargeable power source, the robotic load handling device is instructed to enter the grid cell where the charge unit 156 is located.

Traditionally, as the robotic load handling device enters the grid cell, the hoist element 70 of the robotic load handling device physically interacts or engages with the profiled sections 58, 60 of the charge unit in the sense that the cutaway portion of the hoist element is received between the profiled sections of the charge unit (see Figure 7a and 7b). It is important that the charge unit is correctly positioned over the grid cell when the robotic load handling device is about to dock to the charge station so as to allow the hoist element 70 to be correctly received by the plurality of profiled sections 58, 60. If the charge unit is not correctly positioned over the grid cell, there is the danger that the other parts of the charge unit may foul the hoist element or the hoist element does not correctly position itself to engage or interact with the plurality of profiled sections 58, 60. To mitigate the possibility of the charge unit fouling the hoist element and/or being wrongly positioned to accept the hoist element, the mouth or entrance of the plurality of sections is flared open or has a tapered opening to permit the hoist element to be correctly guided between the profiled sections. As shown in Figure 7 (a and b), the plurality of profiled sections 58, 60 comprises a first profiled section and a second profiled section that are sufficiently spaced apart to accept the width of the hoist element 70 of the robotic load handling device. The side profile of the first and second profiled sections are shaped such that the entrance or mouth of the profiles sections is tapered so as to allow the hoist element to be guided between the first and second profiled sections and therefore, properly engage with the upwardly inclined surfaces of profiled sections.

The upwardly inclined surface of the plurality of profiled sections 58, 60 causes the charge unit comprising the at least two charge providing pads to move or to be drawn towards the top surface of the load handling device in a clamping action and make physical contact with the at least two charge receiving pads 74 on the top surface of the load handling device. The at least two charge providing pads are outwardly biased by a resilient member so as to lessen the impact with the at least two charge receiving pads on the top surface of the load handling device. Movement of the charge unit towards the robotic load handling device provides a clamping action between the at least two providing pads with the at least two charge receiving pads at the top surface of the robotic load handling device.

The speed of entry of the robotic load handling device into the charge unit determines the intensity of the clamping force by relying on the interaction between at least one of the plurality of profiled sections and the hoist element. The charge unit contained within a charge head assembly that is resiliently mounted to a carriage so as to allow vertical movement of the charge unit relative to the carriage. Further detail of the mounting of the charge unit to the carriage is discussed below.

The plurality of profiled sections largely comprises plastic material, more specifically nylon material for its lubrication and its wear properties. However, repeated physical contact between the hoist element and the plurality of profile sections causes wear and tear of the plurality of profiled sections, in particular the upwardly inclined surfaces. In some cases, the profiled sections, which are preferably removeably attached to the support plate, would need to be replaced more frequently.

More importantly, when the robotic load handling device docks at the charge station the hoist element impacts the charge unit with such lateral force as it attempts to travel in a vertical direction along the upwardly inclined surfaces of the profiled sections. This impact force is transmitted to the other parts of the charge station, in particular the mounting points supporting the charge unit to the support structure (see Figure 6). Repeated impact of the hoist element with the charge unit will not only cause wear to the profiled sections but would eventually displace the charge unit over the grid cell to the extent that the hoist element would fail to interact or properly engage with the charge unit. Moreover, the impact force may cause damage to the charge unit and the surrounding support structure, particularly, the mounting points to the grid structure.

In contrast to the charge unit of the prior art, the applicant has mitigated the above problem by devising a charge unit 156 as shown in Figure 9 (a and b) where the hoist element 70 interacts or engages with a moveable cartridge 159 instead of directly interacting with the profiled sections 158. As shown in Figure 9a, the cartridge 159 is configured to travel along the plurality of profiled sections 158 as the hoist element 70 is driven into the charge unit 156 of the present invention. This removes the need for the hoist element 70 to physically contact the plurality of profiled sections 158 and improves the movement of the hoist element 70 along the plurality of profiled sections 158. First and second profiled sections 158 (a and b) are shown in parallel arrangement and spaced apart so as to accommodate the width of the hoist element 70 and to permit the hoist element 70 to travel along the plurality of profiled sections. In other words, the cartridge 159 of the present invention is seated to be moveable along the at least first and second profiled sections 158 (a and b).

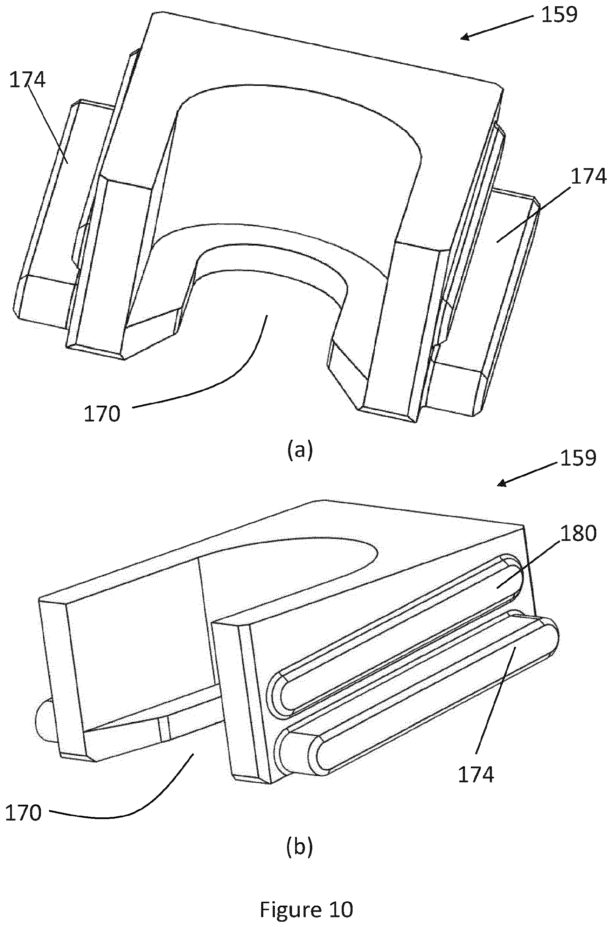

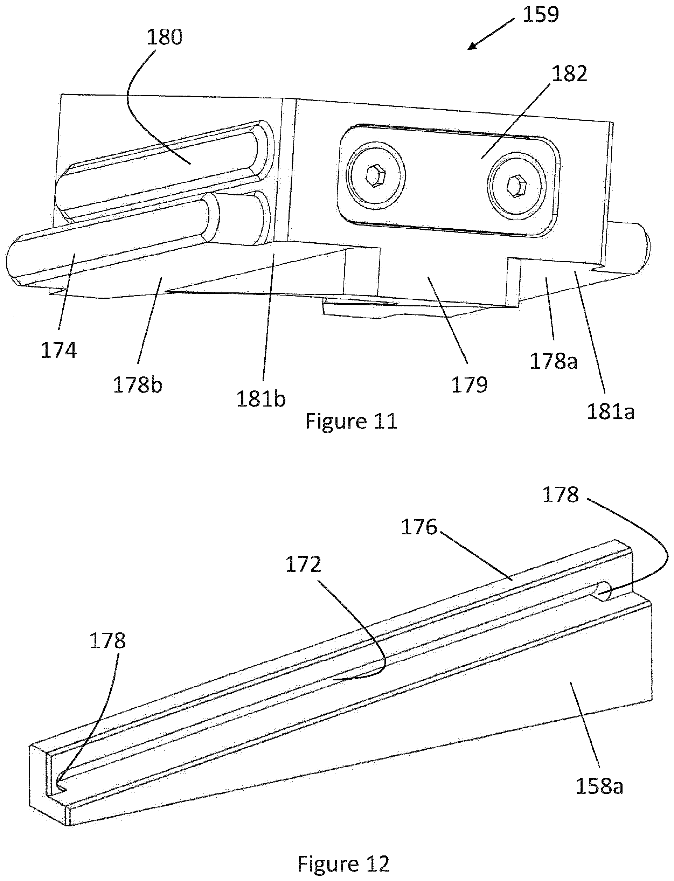

In the particular embodiment of the present invention shown in Figure 10 (a and b), the cartridge 159 comprises a cutaway portion or depression or C-section 170 that is shaped to receive and cradle the underside 72 of the bulbous head of the hoist element 70. The cutaway portion shaped to cradle the underside 72 of the hoist element 70 replaces the wedge shaped mouth at the entrance of the plurality of sections as shown in the prior art set up in Figure 7 (a and b). The charge unit 156 comprises a guide 172 adjacent to at least one of the plurality of the profiled sections 158 (a and b) that is configured to guide the cartridge 159 along the profiled sections 158 (a and b) in a sliding arrangement. In the particular embodiment of the present invention, the guide 172 is formed as a groove adjacent a respective profiled section 158 (a and b). The cartridge 159 comprises at least one protrusion or boss 174 extending from at least one wall of the cartridge 159 that is receivable in the groove 172 (see Figure 12) to guide the cartridge 159 along the profiled sections 158 (a and b). The groove is formed in an upstanding lip 176 adjacent the at least one of the plurality of profiled sections 158 (a and b). In the particular embodiment of the present invention shown in Figures 9 and 10, grooves 172 are positioned either side of the cartridge for receiving the protrusions or boss 174 formed on opposing or lateral sides of the cartridge 159 to guide the cartridge along the plurality of profiled sections 158. In other words, the protrusion 174 or one or more protruding regions of the cartridge are receivable in the guides 172 in a tongue and groove relationship.

The guide 172 comprises a stop 178 at its distal ends to limit the length of travel of the cartridge along the profiled section (see Figure 12). In the particular embodiment of the present invention, the grooves terminate at its ends such that the boss or protrusions 174 extending from the sidewalls of the cartridge 159 butt up against the ends of the guide 172 and thereby, limit the length of travel of the cartridge along the profiled sections 158. The stop 178 prevents the cartridge 159 from being de-seated from the profiled sections 158 (a and b).

The plurality of profiled sections 158 (a and b) comprise an upwardly inclined surface or are wedged shaped such that the cartridge 159 of the present invention moves vertically as it travels along the upwardly inclined surfaces. This causes the charge unit 156 to be drawn towards the charge receiving head on the robotic load handling device. The charge unit 156 of the present invention still enjoys the benefits of the clamping force generated by the interaction of the cartridge 159 with the plurality of profiled sections 158 (a and b) by the hoist element 70 but without the excessive wear on the plurality of profiled sections 158 (a and b). Thus, by varying the profile of the plurality of profiled sections 158 (a and b), the clamping force acting on the robotic load handling device, in particular the charge receiving pads 74, may be customised as required by a specific application. The grooves 172 adjacent the plurality of profiled sections 158 (a and b) help to guide the cartridge 159 along the upwardly inclined surfaces. Together with the groove to guide the cartridge along the upwardly inclined surface, the plurality of profiled sections controls the movement of the cartridge 159 both horizontally and vertically relative to the top surface of the robotic load handling device. The guide 172 can be formed together with at least one of the plurality of profiled sections as a single element. Figure 12 is an example of a single element comprising at least one of the plurality of profiled sections 158a together with the guide 172 according to an embodiment of the present invention. In the particular embodiment of the present invention, the single element is positioned either side of the cartridge to guide the cartridge along the profiled sections. Each of the plurality of profiled sections is wedge shaped providing the upwardly inclined surface that cooperates with the cartridge 159. The guide 172 is shown as a groove formed in the upstanding lip 176 adjacent the profiled section 158a.

In addition to the at least two charge providing pads 162b, additional contact pads 163 may be arranged on the underside of the charge unit 156. The additional contact pads 163 may be for the purpose of anti-arcing or data transfer during charging. In the particular embodiment shown in Figure 9, four additional electrical contact pads 163 are shown on the underside of the charge unit 156 but any number of electrical contact pads may be present. Alternatively, the power transfer means 162 may comprise inductive power transfer means, which does not require physical contact between the power transfer means and the robotic load handling device. Thus, the need to provide a clamping force between the power transfer means 162, the at least two charge providing pads 162b, and the charge receiving pads 74 on the top surface of the robotic load handling device is removed and thereby, lessening any wear on the profiled sections, in particular with the cartridge. Instead, the profiled sections bring the charge providing pads closer to the charge receiving head to enable inductive coupling.

The cartridge 159 for cradling the underside of the hoist element 70 forms a slide bearing that cooperates with plurality of profiled sections 158 (a and b). In order to function as a sliding bearing, the cartridge 159 comprises one or more sliding surfaces 181 (a and b), 180 that are arranged to cooperate with the upwardly inclined surface of the profiled sections (see Figures 10 and 11). A first sliding surface 181 (a and b) is provided on the underside of the cartridge 159 (see Figure 11) and a second sliding surface 180 on opposing side walls either side of the cartridge 159 (see Figure 10). The first sliding surface 181 on the underside of the cartridge provides a sliding surface in the horizontal plane and is sub-divided into two parallel sliding surfaces 181 (a and b) separated by a divider 179. The two parallel sliding surfaces 181 (a and b) are arranged to slide along the first and second profiled sections 158 (a and b). The divider 179 shown as a wedge shaped protrusion is sized to be seated between the first and second profiled sections 158 (a and b) as the two parallel sliding surfaces 181 (a and b) on the underside of the cartridge 159 are arranged to slide along the surface of the first and second profiled sections 158 (a and b). The wedge shaped protrusion of the divider 179 accommodates the C-section 170 of the cartridge for cradling the hoist element 70 (see Figure 10a).

The second sliding surface 180 is on opposing side walls of the cartridge 159 (see Figure 10) and provides a sliding surface in the vertical plane. The second sliding surface 180 is shown as sliding bumps having a height smaller than the protrusions or boss 174 that is received in the groove to guide 172 the cartridge 159 along the upwardly inclined surface. The second sliding surface 180 comprising the sliding bumps are arranged to slide against the side wall of the upstanding lips 176 adjacent the respective profiled sections 158 (a and b) (see Figure 12). One of the functions of the second sliding 'bump' 180 is to prevent the distal ends or end face of the protrusion or boss 174 from rubbing against the interior wall of the groove 172. The cartridge 159 of the present invention can be formed as a single body, e.g. by moulding or 3D printing. The groove 172 can be formed by milling a depression within the body of the cartridge 159. However, the problem with milling is that the surface of the groove 172 cannot be made entirely smooth as a result of the effects of the cutting tool. Thus, the interior surface of the groove 172 may not provide a smooth sliding surface and may introduce one or more sticking points as the cartridge 159 is driven along the upwardly inclined surface. To reduce the effects of these sticking points when the cartridge 159 slides along the upwardly inclined surface, the small sliding bumps 180 on the side of the cartridge 159 sets back the distal end of the boss or protrusion 174 from the interior wall of the groove 172 so that it does not rub against the interior wall of the groove or minimises the contact between the protrusion 174 and the interior surface of the groove.

The sliding surface of the cartridge is, thus, largely provided by the first and second sliding surfaces 181, 180 which respectively cooperate with the upwardly inclined surface and the side wall of the lip 176. The cooperation between the first and second sliding surfaces 181, 180 with the respective portions of the plurality of profiled sections and the upstanding lip 176 ensures a substantially smooth sliding surface. The small bumps 180 on the side of the cartridge 159 can be treated with a lubricant or comprise lubricating materials to assist with the movement of the cartridge 159 along the plurality of profiled sections 158 (a and b).

A single profiled section 158 and the guide 172 can be formed as a single body or formed from separate parts, e.g. moulding or 3D printing. Various materials can used to fabricate the profiled section and the guide. These include but are not limited to plastic, metal, or ceramic. The profiled sections and/or guide can be removably attached to the support plate 157, e.g. by one or more bolts. As the cartridge 159 is configured to slide along the plurality of profiled sections, wear on the plurality of profiled sections is reduced and thus, the profiled sections 158a,b require less frequent replacement. Moreover, the sliding surfaces between the cartridge 159 and the plurality of profiled sections 158 (a and b) help to mitigate the impact force of the hoist element 70 which is carried by a robotic load handling device weighing in as much as 150kg imparting a substantial lateral force against the charge unit 156 as the hoist element 70 travels along the plurality of profiled sections 158 (a and b). This does not only reduce wear on the at least one of the plurality of profiled sections 158 (a and b) but also prevents damage to the supporting structure of the charge station supporting the charge unit 156.

Whilst the cartridge 159 shown in Figures 9 to 11 is configured to slide along the profiled sections as the hoist element 70 is driven into the charge unit 156, the present invention is not limited to the cartridge 159 comprising one or more sliding surfaces. Movement of the cartridge along the profiled sections can be assisted by one or more roller bearings (not shown). The sliding surface between the cartridge and the profiled sections can be configured with one or more roller bearings. For example, one or more roller bearings can be present in the grooves 172 that cooperate with the boss or protrusion 174 of the cartridge. Alternatively, the boss or protrusions of the cartridge 159 can comprise one or more roller bearings that are received in the grooves of the at least two elements. Equally, one or more roller bearings can be present on the underside of the cartridge. In all of the different options, the hoist element 70 is able to travel along the profiled sections by virtue of being seated in the cartridge 159 that is able to travel along the profiled sections so as to mitigate excessive wear to the profiled sections and reducing the impact force on the charge unit 156.

Whilst attempts have been made to ensure a smooth ride of the cartridge 159 along the plurality of profiled sections guided by the grooves, there may still be 'sticking points' of the contact surface between the cartridge 159 and the plurality of profiled sections 158 (a and b) and/or the guides 172 causing the cartridge 172 to rest prematurely between the ends 178 of the guides 172. This is particularly the case where the robotic load handling device is about to demount from the charge station causing the hoist element 70 to be withdrawn from the charge unit 156. During withdrawal of the hoist element 70 from the charge unit 156, the cartridge 159 travels in a downward direction by virtue of gravity and/or is pulled along the profiled sections towards the mouth or entrance of the plurality of the profiled sections 158 (a and b). Ideally, the cartridge 159 cradling the underside of the hoist element 70 remains in contact with the underside of the hoist element 70 as it is withdrawn from the charge unit 156. However, if there are one or more sticking points along the profiled sections and/or the guide, there is a tendency for the hoist element to decouple from the cartridge leaving the cartridge stranded before it has a chance to reach the stop at the entrance of the plurality of profiled sections. Thus, when a subsequent robotic load handling device is about to dock at the charge station, the cartridge 159 is not able to present itself to the hoist element 70 at the entrance of the profiled sections increasing the risk that the hoist element 70 will impact the profiled sections 158 (a and b) and thus, returning to the problems in the prior art arrangement discussed above.

In an embodiment of the present invention, the cartridge can comprise one or more magnets 182 that are magnetically attracted to the hoist element 80 and therefore remain in contact with the hoist element 70 as the hoist element travels along the plurality of profiled sections 158 (a and b). Thus, when disembarking from the charge station, the cartridge 159 remains in contact with the hoist element 70 as the hoist element is withdrawn from the charge unit 156, i.e. the magnet ensures that the cartridge is pulled back to the entrance of the profiled sections as the hoist element 70 is about to leave the charge unit. The cartridge 159 remains in contact with the hoist element 70 until the cartridge 159 butts up against the stop 178 of the guide 172 whereupon the hoist element 70 decouples from the cartridge 159. The one or more magnets 182 are sized to ensure that there is a sufficient magnetic attractive force for the cartridge 159 to remain in contact with the hoist element 70 as the hoist element 70 travels along the plurality of profiled sections 158 (a and b) but decouples from the hoist element 70 when the cartridge 159 hits the stop 178 as the hoist element 70 is withdrawn from the charge unit 156. By ensuring that the cartridge 159 remains in contact with the hoist element 70 as the hoist element 70 is about to withdraw from the charge unit 156 ensures that the cartridge 159 reaches or is returned to the entrance or mouth of the plurality of the profiled sections 158 (a and b) to accept a hoist element 70 from a subsequent robotic load handling device. Other means to ensure that the cartridge 159 remains in contact with the hoist element 70 as the hoist element is about to be withdrawn from the charge unit 156 are permissible in the present invention. For example, the mouth 170 of the cartridge 159 can be shaped such that the underside of the hoist element 70 interacts with the cartridge in a snap fit arrangement which will decouple from the hoist element 70 when the hoist element 70 is withdrawn from the charge unit 156. Alternatively, the charge head assembly 152 may comprise a motor to move the cartridge 159 towards the entrance of the plurality of profiles sections 158 (a and b). The returning feature may alternatively be a resilient member such as a spring which biases the cartridge 159 towards the entrance of the plurality of profiled sections 158 (a and b).

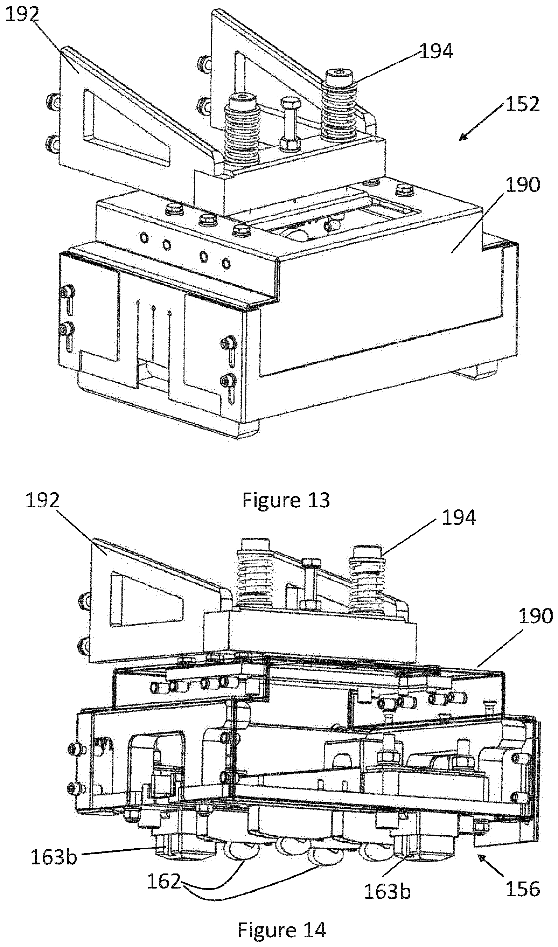

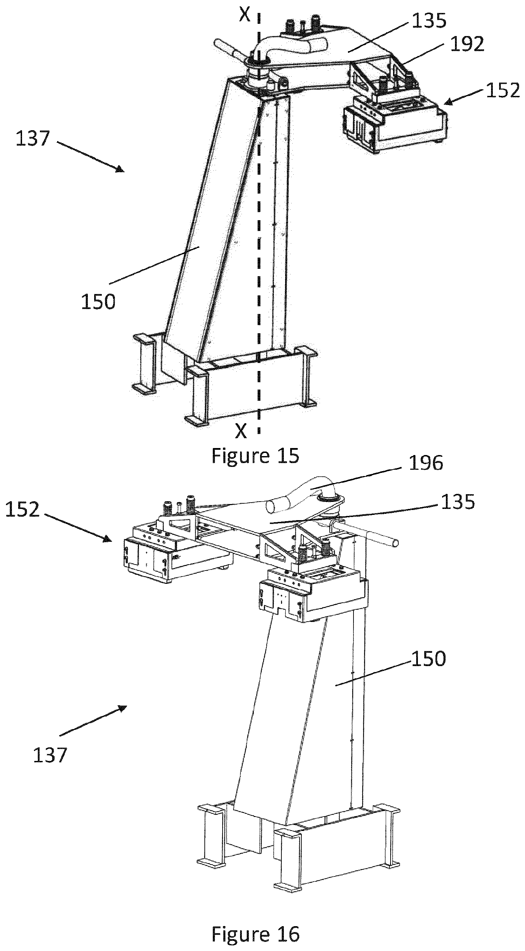

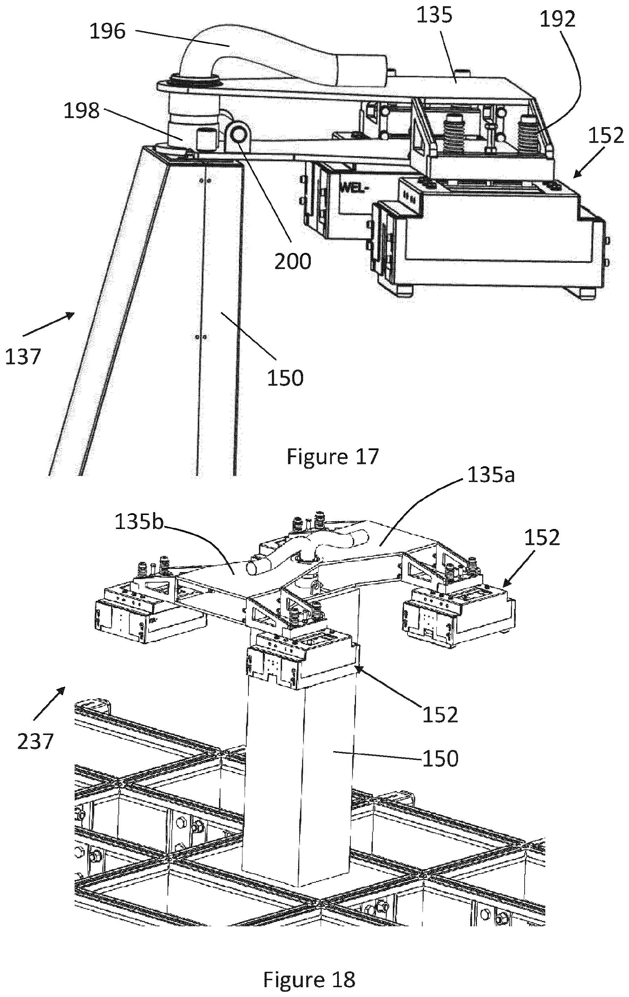

To enable movement of the charge unit 156 in a vertical direction, the charge unit 156 forms part of a charge head assembly 152 that is resiliently mounted to a carriage 135 (see Figures 15 and 17). Figure 13 shows an example of the charge head assembly 152 according to the present invention comprising a housing 190 accommodating the charge unit 156. Further detail of the charge head assembly is described in WO 2019/215221 (Ocado Innovation Limited), the content of which are incorporated herein and described above in the introductory part of the patent specification. The housing 190 supports the charge unit 156 so that the charge unit 156 is not moveable vertically relative to the housing 190 but is moveable within the housing 190 in a horizontal direction as a result of the underside of the hoist element 70 of the robotic load handling device 30 making contact with the cartridge 159. Also shown in Figures 13 and 14 are brackets 192 for mounting of the charge head assembly 152 to a suitable support structure as shown in Figure 15 and 16 or a carriage described in WO 2019/215221 (Ocado Innovation Limited), the contents of which are incorporated herein.

The brackets 192 enable the charge head assembly 152 to be resiliently mounted to a suitable support structure by means of a spring mechanism 194. One end of the bracket 192 is fixedly attached to the support structure and the charge head assembly 152 is resiliently mounted to the other end of the bracket to enable vertical movement of the charge head assembly 152 relative to the bracket 192. The spring mechanism 194 between the charge head assembly 152 and the bracket 192 allows vertical movement of the charge head assembly 152 relative to the bracket 192. In the particular embodiment of the present invention, the spring mechanism comprises two springs 194 as shown in Figure 13 for mounting the charge head assembly 152 to the bracket 192 and allow vertical movement of the charge head assembly 152 relative to the bracket 192. Any number of springs can be used to resiliently mount the charge head assembly 152 to the bracket 192 or equally, any type of resilient member, e.g. rubber. The resilient mounting provides a biasing force of the charge head assembly 152 towards the bracket 192 so as to absorb the impact of the downward vertical movement of the charge head assembly 152 by virtue of the interaction with the profiled sections and returns of the charge head assembly 152 to a position closer to the bracket 192 following charging. The effect of this is that succeeding robotic load handling devices entering into the grid cell below the charge head assembly 152 do not make initial contact with the charge providing pad 163b of the charge unit 156 but instead make initial contact with the cartridge 159 of the charge unit 156. Moreover, by varying the resiliency of the resilient mounting, e.g. spring constant, the clamping force acting on the robotic load handling device may be customised as required by the specific application.

In use, when a robotic load handling device is instructed to charge at the charge station according to the present invention, the robotic load handling device is instructed to move into the grid cell where the charge head assembly is located. As the load handling device enters the grid cell, the hoist element located at the top of the robotic load handling device interacts or engages with the cartridge 159 of the charge unit 156 so as to cause the hoist element 70 and the cartridge 159 to travel along the plurality of profiled sections 158 (a and b) guided by the guide 172. This causes the charge unit 156 to be drawn towards the top of the robotic load handling device which in turn causes the charge providing pads of the charge unit to make electrical contact with the charge receiving pads. Once charging is complete as determined by a communication signal between the rechargeable power source in the robotic load handling device and the charge station, the robotic load handling device moves away from the charge station. As the robotic load handling device moves away from the grid cell, the hoist element is withdrawn from the charge unit 156. This causes the hoist element to be withdrawn from the plurality of profiled sections. As the hoist element is about to be withdrawn from the plurality of profiled sections, the cartridge 159 cradling the underside of the hoist element 70 due to the magnetic attraction between the hoist and the one or more magnets of the cartridge 159 causes the cartridge to move with the hoist element. The cartridge 159 is returned to the entrance or mouth of the plurality of profiled sections 158 (a and b), and decouples from the hoist element once the cartridge 159 hits the stop 178 of the guide 172 and thereby, presents the cartridge 159 for a succeeding robotic load handling device.

The charge unit 156 of the present invention can easily be retrofitted to an existing charge head assembly such as the one taught in WO 2019/215221 (Ocado Innovation Limited). Figure 14 shows the attachment of the charge unit 156 of the present invention to the housing 190 with the correct orientation. In this example, one or more bolts are used to mount the charge unit 156 to the housing 190. The charge unit 156 can easily be removed from the housing 190 following removal of one or more endplates for servicing the charge unit 156 or retrofitting the charge unit with a charge unit 156 according to the present invention. By virtue of the ability to retrofit the charge unit 156 of the present invention allows the charge unit of the present invention to function as a 'cassette'. The housing 190 comprising the charge unit 156 is mounted to the bracket 192 by one or more bolts. The bracket 192 enables the charge head assembly to be mounted to a carriage as taught in WO 2019/215221 (Ocado Innovation Limited) and shown in Figure 6 or to a support structure according to an alternative embodiment of the present invention.

With reference to Figure 6, the existing charge station 37 comprises a main structure 50, a pulley system 54, a clamp, a carriage 35 and the charge head assembly 52. The main structure 50 may contain a rail or guide (not shown) on which the carriage 35 is moveable. The pulley system 54 can manipulate the carriage 35 under manual or automated operation so as to move the carriage 35 along a section of the main structure 50 on a rail or guide to a position of safety away from the grid framework structure 14. Retracting the carriage 35 allows for servicing of components attached to the carriage 35 from a position of safety away from the grid framework structure 14. The clamp attaches the main structure 50 of the charge station 37 to any edge of the grid framework structure 14. The clamp attaches to two vertical upright structures 16 which form the grid framework structure 14. Attaching the charge station 37 to the grid framework structure 14 rather than proximate to the grid framework structure 14, helps to accommodate tolerances in the grid framework structure 14 due to manufacture/installation and/or thermal expansion which otherwise cause alignment issues can be solved because the clamp effectively moves the charge station 37 with the grid framework structure 14. The problem with hoisting or winching the carriage supporting the charge head assembly 52 for servicing is that it adds another layer of complexity to the charge station 37 let alone the manual effort and the time to winch the carriage 35 for serving the components of the charge head assembly 52.

The charge head assembly 152 of the present invention can be mounted to the grid cell by a suitable stand as taught in PCT Patent Publication No. WO2015/019055 (Ocado), the details of which are incorporated herein by reference. Alternatively, the charge head assembly 152 can rotate about a vertical axis extending through the stand so as to enable the charge head assembly 152 to service multiple grid cells.

In alternative embodiment of a charge station according to the present invention, the carriage 135 for supporting the charge head assembly 152 is a 'swing arm' rotatably mounted to a suitable stand or leg 150 so as to enable the carriage 135 and thus, the charge head assembly 152 to be rotatable about a vertical axis X-X extending through the stand or leg 150 from a first position to a second position. The first position can be an operative position such that the charge head overhangs at least one grid cell (see Figure 15) and the second position can be the service position so as to gain access to the at least one charge head assembly 152 from the rear of the charge station (see Figure 16). Thus, instead of winching the carriage along a main structure, the carriage 135 can be a swing arm mounted to a suitable base 150, e.g. a stand or leg. This removes the need of a main structure to carry the carriage as the carriage 150 forms part of the main structure. The ability to cantilever the at least one charge head assembly 152 over a grid cell still remains with the swing arm. A handle 196 can assist with the rotation of the charge head assembly 152 from the operative position to the servicing position and vice versa. Alternatively, rotation of the swing arm 135 can be motorised. In the case where the charge station 137 is mounted at the edge of the grid structure such that the charge head assembly 152 overhangs a grid cell in the operative position, the swing arm 135 can be rotated to the servicing position, i.e. the charge head is swung backwards away from the grid structure in order to gain access to the charge head assembly 152. One way to achieve this angular orientation of the swing arm 135 from the operative position to the service position is that the operative position is diametrically opposite the service position. The lower end of the leg or stand is mounted to the grid framework structure by a suitable clamp so as to accommodate the tolerances in the grid framework structure and movement as a result of expansion/contraction of the grid members making up the grid framework structure.

An expanded view of the 'swing' arm 135 for rotating the charge head assembly 152 about a vertical axis is shown in Figure 17. Here, the charge head assembly 152 is mounted to a first end of the swing arm 135 via the bracket 192 as discussed above and the second end of the swing arm 135 is rotatable mounted to the leg or stand 150. The rotatable mounting of the second end of the swing arm 135 can be any rotational mechanism known in the art. For example, the rotational mechanism can be provided by a bearing and/or bush assembly 198. The rotational mechanism can be motorised. One or more locking mechanisms (not shown) can be provided on the swing arm 135 to lock the swing arm in the operative position when the charge head assembly overhangs a grid cell and in the servicing position to gain access to the charge head assembly for servicing. Also shown in Figure 17 is that the swing arm or carriage 135 can pivotally mounted to the base by a hinge 200 so as to enable rotation about a horizontal axis extending through the hinge 200. The hinge 200 allows the charge head assembly to be flipped upwards to inspect the components of the charge head assembly when moved to the service position.

In the particular example shown in Figures 16 to 18, the charge station 137 comprises two charge head assemblies 152, each of the two charge head assemblies overhanging adjacent grid cells suitable for charging two robotic load handling devices simultaneously. Each of the two charge head assemblies 152 is resiliently mounted to different portions of the swing arm 135 and are separately moveable relative to the swing arm 135. In the particular embodiment of the present invention, the charge head assemblies 152 are resiliently mounted either side of the swing arm 135 such that they are laterally disposed either side of the swing arm 135.

Whilst the particular embodiment of the present invention shows two charge head assemblies 152 resiliently mounted to the swing arm 135, the present invention is not limited to two charge head assemblies 152 and can include multiple charge head assemblies. For example and as shown by the perspective view of the charge station 237 in Figure 18, one or more swing arms 135 can be rotatably mounted to the stand 150 so that the charge station resembles a 'tree", each of the one or more swing arms 135 supporting one or more charge head assemblies 152. For example, a plurality of swing arms 135 can be rotatably mounted to the stand or base 150, each of the plurality of swing arms 135 supporting one or more charge head assemblies 152. The plurality of swing arms 135 provides a first set of charge head assemblies mounted to a first swing arm 135a operative over one or more grid cells and a second or reserve set of charge head assemblies mounted to a second swing arm 135b in the service position. When needing to service one or more of the charge head assemblies in the operative position and to mitigate downtime servicing the charge head assemblies, the second or a reserve set of charge head assemblies mounted to the second swing arm 135b can be rotated to the operative position and the first swing arm 135a supporting the first set of charge head assemblies is moved to the servicing position. The first swing arm 135a and the second swing arm 135b can be connected together such that rotation of the first swing arm 135a causes rotation of the second swing arm 135b. Thus, whilst the first set of charge head assemblies are being serviced, the charge station 237 is still operational since the second set of charge heads are moved to the operative position. The plurality of swing arms 135(a and b) can be arranged on a single stand or base 150 such that the charge station can comprise rotationally symmetrically arranged sets of charge head assemblies mounted to a plurality of swing arms. For example, the sets of charge head assemblies can be mounted to the plurality of swing arms in a star configuration.

Having a charge station comprising multiple swing arms, each of the swing arms supporting a set of one or more charge head assemblies and extending in different directions, also has an advantage of charging multiple robotic load handling device simultaneously. For example and as shown in Figure 18, rather than mounting the charge station at the edge of the grid framework structure, the charge station can be mounted towards the interior of the grid structure such that sets of charge head assemblies overhangs multiple grid cells. In other words, each of the swing arms are orientated in such way that a charge head assembly mounted to each of the swing arms overhangs a separate grid cell, i.e. multiple swing arms can be mounted to the base 150 in a 'star' like fashion enabling a plurality of robotic load handling devices to dock at a given charge head assembly. In such a configuration, the swing arms do not need to be made rotatable since each of the swing arms are in the operative position. In Figure 18, the lower end of the stand or leg is shown mounted to a suitable anchor point on the grid cell. In the particular embodiment shown in Figure 18, the base or stand 150 of the charge station 237 is mounted to a grid cell by virtue of suitable footing or clamp.

The charge head assembly described with reference to Figures 13 to 18 is not limited to the charge unit shown in Figure 9 and can comprise the charge unit as shown in Figure 7 in the sense that the charge head assembly is mounted to a swing arm or carriage that is rotatably mounted to the base about the vertical axis extending through the base.

## Claims

1. A charge unit (156) for a robotic load handling device (30) operative on a grid framework structure (14) comprising a plurality of rails arranged in a grid pattern, the plurality of rails supports one or more robotic load handling devices and comprises a first set of parallel rails for guiding movement of the robotic load handling device in a first direction across the top of the grid framework structure and a second set of parallel rails arranged perpendicular to the first set of parallel rails for guiding movement of the robotic load handling device in a second direction perpendicular to the first direction, the robotic load handling device comprises a hoist element for lifting the load handling device, the charge unit (156) comprising:
i) at least two charge providing pads (162b) for coupling with a charge receiving head of the robotic load handling device (30),
ii) a plurality of profiled sections (158), wherein each of the plurality of profiled sections (158) comprises an upwardly inclined surface,
iii) a slide bearing (159) for interfacing with the hoist element (70), said slide bearing comprising at least one sliding surface (181,180) in sliding contact with the plurality of profiled sections, such that the slide bearing acts between the hoist element and the upwardly inclined surface of the plurality of profiled sections, and
iv) a guide (172) for guiding the movement of the slide bearing (159) along the profiled section (158),
wherein the slide bearing is moveable along the upwardly inclined surface of the plurality of profiled sections (30) as the hoist element is driven into the charge unit.

2. The charge unit of claim 1, wherein the slide bearing (159) comprises one or more protruding regions (174) and the guide (172) comprises a guide stop that is configured to cooperate with the one or more protruding regions (174) to limit the travel of the slide bearing along the plurality of profiled sections (158).

3. The charge unit of claim 1 or 2, wherein the guide (172) comprises a groove for cooperation with the one or more protruding regions (174) to guide the slide bearing (159) along the plurality of profiled sections (158).

4. The charge unit according to any preceding claim, wherein the guide (172) is formed in a lip (176) adjacent at least one of the profiled sections (158) and the slide bearing (159) comprises a protrusion (174) in sliding contact with the lip.

5. The charge unit according to any proceeding claim, wherein the plurality of profiled sections are spaced apart to define an entrance for accepting the width of the hoist element 70 of the robotic load handling device.

6. The charge unit according to claim 5, wherein the charge unit further comprises a returning feature for returning the slide bearing (159) to the entrance of the plurality of profiled sections.

7. The charge unit of claim 6, wherein the returning feature comprises means for biasing the slide bearing (159) to the entrance of the plurality of profiled sections.

8. The charge unit of claim 6, wherein the returning feature comprises a magnet and / or is motorised.

9. The charge unit according to any preceding claim, wherein the at least two charge providing pads are outwardly biased by a resilient member.

10. A charge station (137) comprising at least one charge head assembly (152), the at least one charge head assembly comprising a charge unit (56) as claimed in any of the claims 1 to 9, a support structure for supporting the at least one charge head assembly (152), the support structure comprising a base (150) and at least one carriage (135), the at least one charge head assembly (152) being resiliently mounted to the carriage (135) such that the at least one charge head assembly extends outwardly from the base and moveable in a vertical direction relative to the carriage (135).

11. The charge station of claim 10, wherein the carriage (135) is retractable towards the base (150) by a pulley system (54).

12. The charge station of claim 10 or 11, wherein the carriage (135) is rotatably mounted to the base (150) so as to be rotatable about a vertical axis extending through the base.

13. The charge station of claim 12, wherein the carriage (135) is an arm rotatably mounted to the base (150).

14. A storage system comprising:
a grid structure comprising a first set of tracks and a second set of tracks running transversely to the first set in a substantially horizontal plane and arranged in a grid pattern comprising a plurality of grid spaces or grid cells;
a charge station (137) as defined in any of the claims 10 to 13 mounted to the grid structure such that the at least one charge head assembly (52) of the charge station overhangs at least one grid cell.

15. The storage system of claim 14, further comprising a load handling device (30) comprising:
i) a driving mechanism operatively arranged for moving the load handling device (30) on the grid framework to traverse along the first set and the second set of tracks over the plurality of grid spaces or grid cells;
ii) a lifting device comprising a lifting drive assembly and a grabber device (39) such that when the load handling device is positioned above a stack (12) of containers occupying a grid space or grid cell, the grabber device (39) is configured, in use, to releasably grip a container (10) and lift the container from the stack (12) into a container-receiving space (40);
iii) a charge receiving head for coupling with the at least two charge providing pads and a hoist element (70) for interfacing with the sliding bearing (159) of the charge unit (56).

## Patentansprüche

1. Ladeeinheit (156) für eine robotische Lasthandhabungsvorrichtung (30), die auf einer Gitterrahmenstruktur (14) betrieben wird, umfassend eine Vielzahl von in einem Gittermuster angeordneten Schienen, wobei die Vielzahl von Schienen eine oder mehrere robotische Lasthandhabungsvorrichtungen trägt und einen ersten Satz paralleler Schienen zum Führen der Bewegung der robotischen Lasthandhabungsvorrichtung in einer ersten Richtung über die Oberseite der Gitterrahmenstruktur und einen zweiten Satz paralleler Schienen, der senkrecht zu dem ersten Satz paralleler Schienen angeordnet ist, zum Führen der Bewegung der robotischen Lasthandhabungsvorrichtung in einer zweiten Richtung senkrecht zu der ersten Richtung umfasst, wobei die robotische Lasthandhabungsvorrichtung ein Hubelement zum Heben der Lasthandhabungsvorrichtung umfasst, wobei die Ladeeinheit (156) umfasst:
i) mindestens zwei Ladezuführungskontaktflächen (162b) zum Koppeln mit einem Ladeempfangskopf der robotischen Lasthandhabungsvorrichtung (30),
ii) eine Vielzahl von Profilabschnitten (158), wobei jeder der Vielzahl von Profilabschnitten (158) eine nach oben geneigte Fläche umfasst,
iii) ein Gleitlager (159) zum Verbinden mit dem Hubelement (70), wobei das Gleitlager mindestens eine Gleitfläche (181, 180) in Gleitkontakt mit der Vielzahl von Profilabschnitten umfasst, sodass das Gleitlager zwischen dem Hubelement und der nach oben geneigten Fläche der Vielzahl von Profilabschnitten wirkt, und
iv) eine Führung (172) zum Führen der Bewegung des Gleitlagers (159) entlang des Profilabschnitts (158),
wobei das Gleitlager entlang der nach oben geneigten Fläche der Vielzahl von Profilabschnitten (30) beweglich ist, wenn das Hubelement in die Ladeeinheit angetrieben wird.

2. Ladeeinheit nach Anspruch 1, wobei das Gleitlager (159) einen oder mehrere vorstehende Bereiche (174) umfasst und die Führung (172) einen Führungsanschlag umfasst, der dazu ausgelegt ist, mit dem einen oder den mehreren vorstehenden Bereichen (174) zusammenzuwirken, um den Verfahrweg des Gleitlagers entlang der Vielzahl von Profilabschnitten (158) zu begrenzen.

3. Ladeeinheit nach Anspruch 1 oder 2, wobei die Führung (172) eine Nut zum Zusammenwirken mit dem einen oder den mehreren vorstehenden Bereichen (174) umfasst, um das Gleitlager (159) entlang der Vielzahl von Profilabschnitten (158) zu führen.

4. Ladeeinheit nach einem der vorhergehenden Ansprüche, wobei die Führung (172) in einer Lippe (176) benachbart zu mindestens einem der Profilabschnitte (158) ausgebildet ist und das Gleitlager (159) einen Vorsprung (174) in Gleitkontakt mit der Lippe umfasst.

5. Ladeeinheit nach einem der vorhergehenden Ansprüche, wobei die Vielzahl von Profilabschnitten beabstandet ist, um einen Eingang zum Aufnehmen der Breite des Hubelements 70 der robotischen Lasthandhabungsvorrichtung zu definieren.

6. Ladeeinheit nach Anspruch 5, wobei die Ladeeinheit ferner ein Rückführmerkmal zum Rückführen des Gleitlagers (159) zu dem Eingang der Vielzahl von Profilabschnitten umfasst.

7. Ladeeinheit nach Anspruch 6, wobei das Rückführmerkmal Mittel zum Vorspannen des Gleitlagers (159) zu dem Eingang der Vielzahl von Profilabschnitten umfasst.

8. Ladeeinheit nach Anspruch 6, wobei das Rückführmerkmal einen Magneten umfasst und/oder motorisiert ist.

9. Ladeeinheit nach einem der vorhergehenden Ansprüche, wobei die mindestens zwei Ladezuführungskontaktflächen durch ein elastisches Element nach außen vorgespannt sind.

10. Ladestation (137), umfassend mindestens eine Ladekopfbaugruppe (152), wobei die mindestens eine Ladekopfbaugruppe eine Ladeeinheit (56) nach einem der Ansprüche 1 bis 9 umfasst, eine Tragstruktur zum Tragen der mindestens einen Ladekopfbaugruppe (152), wobei die Tragstruktur eine Basis (150) und mindestens einen Schlitten (135) umfasst, wobei die mindestens eine Ladekopfbaugruppe (152) federnd an dem Schlitten (135) gelagert ist, sodass die mindestens eine Ladekopfbaugruppe von der Basis nach außen vorsteht und in einer vertikalen Richtung relativ zu dem Schlitten (135) beweglich ist.

11. Ladestation nach Anspruch 10, wobei der Schlitten (135) durch ein Flaschenzugsystem (54) zu der Basis (150) hin einziehbar ist.

12. Ladestation nach Anspruch 10 oder 11, wobei der Schlitten (135) drehbar an der Basis (150) gelagert ist, um um eine vertikale Achse, die sich durch die Basis erstreckt, drehbar zu sein.

13. Ladestation nach Anspruch 12, wobei der Schlitten (135) ein Arm ist, der drehbar an der Basis (150) gelagert ist.

14. Lagersystem, umfassend:
eine Gitterstruktur, umfassend einen ersten Satz von Gleisen und einen zweiten Satz von Gleisen, die quer zu dem ersten Satz in einer im Wesentlichen horizontalen Ebene verlaufen und in einem Gittermuster angeordnet sind, das eine Vielzahl von Gitterfeldern oder Gitterzellen umfasst;
eine Ladestation (137) wie in einem der Ansprüche 10 bis 13 definiert, die an der Gitterstruktur montiert ist, sodass die mindestens eine Ladekopfbaugruppe (52) der Ladestation mindestens eine Gitterzelle überragt.

15. Lagersystem nach Anspruch 14, ferner umfassend eine Lasthandhabungsvorrichtung (30), umfassend:
i) einen Antriebsmechanismus, der funktionsfähig zum Bewegen der Lasthandhabungsvorrichtung (30) auf der Gitterrahmenstruktur angeordnet ist, um entlang des ersten Satzes und des zweiten Satzes von Gleisen über die Vielzahl von Gitterfeldern oder Gitterzellen zu verfahren;
ii) eine Hubvorrichtung, umfassend eine Hubantriebsbaugruppe und eine Greifervorrichtung (39), sodass, wenn die Lasthandhabungsvorrichtung über einem Stapel (12) von Behältern positioniert ist, die ein Gitterfeld oder eine Gitterzelle belegen, die Greifervorrichtung (39) dazu ausgelegt ist, im Gebrauch einen Behälter (10) lösbar zu greifen und den Behälter von dem Stapel (12) in einen Behälteraufnahmeraum (40) zu heben;
iii) einen Ladeempfangskopf zum Koppeln mit den mindestens zwei Ladezuführungskontaktflächen und ein Hubelement (70) zum Verbinden mit dem Gleitlager (159) der Ladeeinheit (56).

## Revendications

1. Unité de charge (156) pour un dispositif de manutention de charge robotique (30) fonctionnant sur une structure à ossature en grille (14) comprenant plusieurs rails agencés en un motif de grille, la pluralité de rails supporte un ou plusieurs dispositifs de manutention de charge robotiques et comprennent un premier ensemble de rails parallèles pour le guidage d'un déplacement du dispositif de manutention de charge robotique dans une première direction à travers le sommet de la structure à ossature en grille et un second ensemble de rails parallèles agencés perpendiculaires au premier ensemble de rails parallèles pour le guidage du déplacement du dispositif de manutention de charge robotique dans une seconde direction perpendiculaire à la première direction, le dispositif de manutention de charge robotique comprend un élément élévateur pour le levage du dispositif de manutention de charge, l'unité de charge (156) comprenant :
i) au moins deux blocs de fourniture de charge (162b) pour l'accouplement avec une tête de réception de charge du dispositif de manutention de charge robotique (30),
ii) une pluralité de sections profilées (158), dans laquelle chacune de la pluralité de sections profilées (158) comprend une surface inclinée vers le haut,
iii) un palier à glissement (159) destiné à former une interface avec l'élément élévateur (70), ledit palier à glissement comprenant au moins une surface de glissement (181, 180) en contact de glissement avec la pluralité de sections profilées, de telle sorte que le palier à glissement agisse entre l'élément élévateur et la surface inclinée vers le haut de la pluralité de sections profilées, et
iv) un guide (172) pour guider le déplacement du palier à glissement (159) le long de la section profilée (158),
dans laquelle le palier à glissement peut être déplacé le long de la surface inclinée vers le haut de la pluralité de sections profilées (30) lorsque l'élément élévateur est entraîné dans l'unité de charge.

2. Unité de charge selon la revendication 1, dans laquelle le palier à glissement (159) comprend une ou plusieurs régions saillantes (174) et le guide (172) comprend un arrêt de guidage configuré pour coopérer avec les une ou plusieurs régions saillantes (174) pour limiter le déplacement du palier à glissement le long de la pluralité de sections profilées (158).

3. Unité de charge selon la revendication 1 ou 2, dans laquelle le guide (172) comprend une rainure destinée à coopérer avec les une ou plusieurs régions saillantes (174) pour guider le palier à glissement (159) le long de la pluralité de sections profilées (158).

4. Unité de charge selon une quelconque revendication précédente, dans laquelle le guide (172) est formé en une lèvre (176) adjacente à au moins l'une des sections profilées (158) et le palier à glissement (159) comprend une saillie (174) en contact de glissement avec la lèvre.

5. Unité de charge selon une quelconque revendication antérieure, dans laquelle la pluralité de sections profilées sont espacées pour définir une entrée destinée à accepter la largeur de l'élément élévateur 70 du dispositif de manutention de charge robotique.

6. Unité de charge selon la revendication 5, dans laquelle l'unité de charge comprend en outre une caractéristique de retour pour ramener le palier à glissement (159) à l'entrée de la pluralité de sections profilées.

7. Unité de charge selon la revendication 6, dans laquelle la caractéristique de retour comprend des moyens pour solliciter le palier à glissement (159) vers l'entrée de la pluralité de sections profilées.

8. Unité de charge selon la revendication 6, dans laquelle la caractéristique de retour comprend un aimant et/ou est motorisée.

9. Unité de charge selon une quelconque revendication précédente, dans laquelle les au moins deux blocs de fourniture de charge sont sollicités vers l'extérieur par un élément élastique.

10. Station de charge (137) comprenant au moins un ensemble tête de charge (152), l'au moins un ensemble tête de charge comprenant une unité de charge (56) telle que revendiquée dans l'une quelconque des revendications 1 à 9, une structure de support pour supporter l'au moins un ensemble tête de charge (152), la structure de support comprenant une base (150) et au moins un chariot (135), l'au moins un ensemble tête de charge (152) étant monté de manière élastique sur le chariot (135) de telle sorte que l'au moins un ensemble tête de charge s'étende vers l'extérieur à partir de la base et puisse se déplacer dans une direction verticale par rapport au chariot (135).

11. Station de charge selon la revendication 10, dans laquelle le chariot (135) est rétractable vers la base (150) par un système de poulie (54).

12. Station de charge selon la revendication 10 ou 11, dans laquelle le chariot (135) est monté de manière rotative sur la base (150) de façon à être rotatif autour d'un axe vertical s'étendant à travers la base.

13. Station de charge selon la revendication 12, dans laquelle le chariot (135) est un bras monté de manière rotative sur la base (150).

14. Système de stockage comprenant :
une structure de grille comprenant un premier ensemble de voies et un second ensemble de voies courant transversalement au premier ensemble dans un plan sensiblement horizontal et agencées en un motif de grille comprenant une pluralité d'espaces de grille ou de cellules de grille ;
une station de charge (137) telle que définie dans l'une quelconque des revendications 10 à 13 montée sur la structure de grille de telle sorte que l'au moins un ensemble tête de charge (52) de la station de charge surplombe au moins une cellule de grille.

15. Système de stockage selon la revendication 14, comprenant en outre un dispositif de manutention de charge (30) comprenant :
i) un mécanisme d'entraînement agencé de manière fonctionnelle pour déplacer le dispositif de manutention de charge (30) sur l'ossature de grille pour traverser le premier ensemble et le second ensemble de voies sur la pluralité d'espaces de grille ou de cellules de grille ;
ii) un dispositif de levage comprenant un ensemble d'entraînement de levage et un dispositif formant grappin (39) de telle sorte que lorsque le dispositif de manutention de charge est positionné au-dessus d'une pile (12) de conteneurs occupant un espace de grille ou une cellule de grille, le dispositif formant grappin (39) est configuré, en utilisation, pour saisir de manière libérable un conteneur (10) et soulever le conteneur de la pile (12) dans un espace de réception de conteneurs (40) ;
iii) une tête de réception de charge pour l'accouplement avec au moins deux blocs de fourniture de charge et un élément élévateur (70) pour former une interface avec le palier à glissement (159) de l'unité de charge (56).
